# EUROPEAN PATENT SPECIFICATION

(11) **EP 0 812 669 B1**
(45) Date of publication and mention of the grant of the patent: **28.07.2004**
(21) Application number: 97112079.5
(22) Date of filing: 29.05.1992
(51) Int. Cl.: B29C 45/16, B29C 45/37, A47G 25/14, A47G 25/28, A47G 25/30

(54) **Method of molding a composite plastic garment hanger**
Verfahren zum Giessen von Kunststoff-Kleiderbügeln
Procédé pour mouler des cintres en matière plastique

(30) Priority: 29.05.1991 US 706779; 18.05.1992 US 885291
(43) Date of publication of application: 17.12.1997
(62) Divisional of application: 92109101.3
(73) Proprietor: SPOTLESS PLASTICS PTY. LTD., Moorabbin, VIC 3189 (AU)
(72) Inventor: Harmer, Ronald G., Centereach, New York 11720 (US); Olk, Olaf F., Hauppauge, New York 11788 (US); Gouldson, Stanley, Northport, New York 11768 (US)
(74) Representative: Grünecker, Kinkeldey, Stockmair & Schwanhäusser Anwaltssozietät

(56) References cited:
- EP-A- 0 172 149
- EP-A- 0 412 670
- DE-A- 1 929 875
- FR-A- 2 473 949
- FR-A- 2 601 618
- US-A- 4 886 195
- PATENT ABSTRACTS OF JAPAN vol. 7, no. 31 (M-192), 8 February 1983 (1983-02-08) & JP 57 187228 A (MATSUSHITA DENKI SANGYO KK), 17 November 1982 (1982-11-17)

## Description

The present invention relates to a method of molding a composite plastic garment hanger according to the preamble of claim 1.

In industry, particularly such as the garment manufacturing industry, plastic garment hangers are widely employed for the purpose of shipping and displaying garments, such hangers frequently being of the inexpensive ship-on type whereby the garment is shipped from the manufacturer or wholesaler to the retailer while suspended from the hanger. Generally, such garment hangers are inexpensive single-piece or unitary molded plastic structures which are adapted to be either discarded at the time of sale, returned to the garment manufacturer or provided to a customer free of charge in conjunction with the purchase of the garment suspended therefrom.

Garment hangers may either be simply constructed as molded plastic structures incorporating a unitary or metal central hook portion adapted to be suspended from a suitable support, such as a garment rack or the like, and with a hanger body portion having arms extending in opposite directions from the base of the hook portion so as to facilitate a garment to be suspended therefrom. When needed for a specific use, the opposite or distal ends of the body portion or arms may be formed with suitable grip slots or clip members to enable the attachment of various kinds of garments thereto, such as underwear, slips, brassieres, multiple garments, and the like.

A method of the type as defined in the preamble of the independent claim 1 is disclosed in EP-A-412 670. This reference describes a garment hanger having gripping means which are provided with coinjected molded pads. In order to prevent the plastic material which forms the pad from flowing into spaces formed by shrinkage of the first plastic material, a dam is provided which limits laterally the shape of the pad. The border surface between the pad and the body of the hanger is flat and is not provided with elements of a mechanical joint pattern which elements might help to increase the heat transfer surface between the pad and the body.

US-A-4,886,195 discloses a molded plastic garment hanger which has a portion of its hook, intermediate the top and bottom thereof, shaped to provide an information panel. The information panel together with the hanger is molded in a single mold (no coinjected molding).

DE-A-19 29 875 discloses a tool for injection molding. The tool includes a wall portion of the mold which is provided with a logo or the like, which is replaceable, attached to the mold for being able to change the logo imparted to the injection molded element.

JP-A-57187228 describes a molding method of indicator panel in one body by using a coinjection process. The border surface between the two coinjected plastic materials is flat.

The prior art (EP-A-172 149) includes a number of garment hangers that are molded so as to receive various indicia or logos, which may be representative of the garment manufacturer or designer, or possibly the retail establishment, to provide a form of advertisement and to also identify the origin of the garment being suspended therefrom. An embossed logo may also be imprinted therein so as to provide various color contrasts provided through molded raised or recessed surfaces representative of a logo, advertisement, or the like as mentioned hereinbefore.

The prior art (FR-A-2 473 949) also includes garment hangers for coats, blazers and other heavier garments which are fitted with pads or rubber strips, along the shoulder portion, or non-slip adhesive coatings on the pants bar to help retain the garment on the hanger. The pads are molded onto a previously completed body and are locked thereto by retaining means.

In essence, US-A-4 416 602 discloses an injection molding apparatus for manufacturing articles from different types of plastic materials, in which a first plastic material is injected into a mold to form a frame member or the like, and thereafter subsequent to cooling and solidifying of the molten plastic material, a second plastic material is injected into the cavity of the mold so as to form an insert within an aperture of the frame member provided by the first plastic material, thereby fuzing the plastic materials and forming a mechanical bond therebetween.

Similar types of molding apparatus and methods of that kind are disclosed in various patent publications, representative of which are US-A- 4 711 621 disclosing a mold for producing composite bodies from different plastic materials; US-A-4 335 068 and US-A- 3 577 596.

Various desirable attributes for hangers may be created in a coinjected hanger which are not available to a hanger molded from a single plastic. These attributes may include color ornamentation, size index markings, logos or trademarks associated with the garment suspended from the garment, integrally molded non-slip portions to retain garments on the hangers, and garment retaining clips formed of resilient plastic to prevent breakage thereof.

Accordingly, in order to improve upon the plastic hangers which are currently available in the industry, and which incorporate integral structure bearing indicia or logos for the purpose of identifying manufacturers, designers, retailers or the like by having such information molded or embossed into the primary hanger construction, the invention contemplates a method of molding plastic garment hangers in accordance with claim 1, incorporating at least at one suitable location on the hanger, an insert from a second or separate plastic material. The composite garments hangers which are thus formed from two separate materials, may be constituted from two plastic materials of the same color and/or type of plastic, or from different kinds of plastic materials and which, if desired, may be imparted different colors to provide a decorative effect. The second plastic material for the insert which is molded into the frame-like enclosure and which can have a logo impressed or molded therein, is produced in the same mold for producing the basic hanger structure through a co-injection method, subsequently to the initial molding and cooling of the basic hanger structure so as to cause the insert to fuse and bond with the contacting surfaces within the enclosure molded into the plastic material for the hanger. This bond may be a mechanical bond, a plastic molded bond, or a fusion bond, depending on the plastics selected, and the relative injection, set and cool cycles of the coinjection machine. This imparts a versatility to the construction and utilization of such garment hangers inasmuch as a single mold with a movable core can be employed for forming the entire composite plastic garment hanger construction, and the mold may be modified with regard to the formation of the insert portion, so as to enable the hanger to be individualized concerning the incorporation of indicia representative manufacturers, designers and/or retail establishments at a minimum cost and effort.

For this purpose, the invention also contemplates a two-step molding procedure or, in essence, a co-injection plastic molding method whereby plastic materials of different types and/or colors may be readily employed so as to have a first plastic material of a specified type and color form the basic hanger structure, cooled to some extent within the mold so as to at least partially solidify, and thereafter a mold core is movable into a position in communication with an inlet for a further or second plastic material which may be either of the same color and/or type as the first plastic material or, possibly of a different color and/or material type, and in which the second plastic material forms the insert which is fused and bonded with the plastic material of the basic hanger structure so as to provide for either a permanent or detachable connection therebetween. However, it may also be readily appreciated that, upon the manufacture of larger quantities of such garment hangers, in the event that appreciable numbers of such hangers bearing a specific indicia or logo cannot be employed, it may be possible to simply punch or knock out the insert by applying lateral mechanical pressure thereto, and thus facilitate removal of the undesired logo-bearing insert from the hanger without inherently damaging the basic hanger construction itself, thereby enabling such garment hangers to be generically employed with other types and makes of garments.

Accordingly, it is an object of the present invention to provide a method of molding a plastic garment hanger which incorporates an insert consisting of a second plastic material adapted to have indicia, logo or non-slip means molded therein, and which insert may be fused to the hanger structure so as to form a molded plastic or mechanical bond with the first plastic material constituting the basic garment hanger.

This object is achieved according to the invention by the method as defined in claim 1.

Particular embodiments of the invention are the subject of the dependent claims.

An advantage of the present invention is to provide a molded plastic garment hanger which incorporates a non-slip insert consisting of a second plastic material that is softer and stickier than the garment hanger body, which insert may be fused to the hanger structure so as to form a molded plastic or mechanical bond with the first plastic material constituting the basic garment hanger.

Another advantage of the present invention is to provide a method of molding a two-component plastic garment hanger by a single co-injection molding process, whereby an insert which may.be of a similar color and/or plastic material,as the basic hanger construction, or alternatively, of a different coloring and/or type of plastic material, is fused within a mold to the material of the basic hanger construction so as to form a mechanical bond therebetween.

Yet another advantage of the present invention is to provide a method for the co-injection molding of a plastic garment hanger construction which is constituted from composite plastic materials.

The invention may now be more readily ascertained from the following detailed description of preferred embodiments thereof, taken in conjunction with the accompanying drawings; in which:
Figure 1 illustrates a fragmentary side view of a molded plastic garment hanger incorporating an insert pursuant to the inventive method;
Figure 2 illustrates an embodiment in a view similar to Fig. 1, showing a modification thereof;
Figure 3 illustrates an embodiment in a view similar to Fig. 1, showing a further modification thereof;
Figure 4 illustrates a fragmentary schematic plan view of a mold showing the cavity for forming the plastic garment hanger pursuant to the invention;
Figure 5 illustrates a sectional view taken along line 5 - 5 in Fig. 4;
Figure 6 illustrates a view similar to Fig. 5 showing the mold in a further operative position;
Figure 7 illustrates a view similar to Fig. 5 showing the mold in the final operative position for forming the composite molded plastic garment hanger;
Figure 8 illustrates a side view of an integral molded plastic garment hanger incorporating, for the purposes of illustration, two types of non-slip plastic inserts, with one type on each shoulder of the hanger;
Figure 9 illustrates a side view of a composite garment hanger having a molded plastic body incorporating non-slip plastic inserts in the shoulder portion thereof;
Figure 10 is a cross-section of the hanger illustrated in Fig. 8 taken along section line 10-10;
Figure 11 is a cross-section of the hanger illustrated in Fig. 9 taken along section line 11-11.
Figure 12 is a cross-section of the lower portion of the hanger illustrated in Figure 9 taken along section line 12-12.
Figure 13 is a cross-section of a portion of a garment hanger that would be formed by the mold illustrated in Fig. 16, taken along section line 13-13 in Fig. 16;
Figure 14 is a cross-section of an alternative embodiment of the portion of a garment hanger that would be formed by an alternate mold construction, if taken along section line 13-13 in Figure 16;
Figure 15 is a cross-section of an alternative embodiment of the portion of a garment hanger that would be formed by still another alternate mold construction if taken along section line 13-13 in Figure 16; and
Figure 16 is a cross-section of a mold cavity used to form the hanger illustrated in Figure 8.

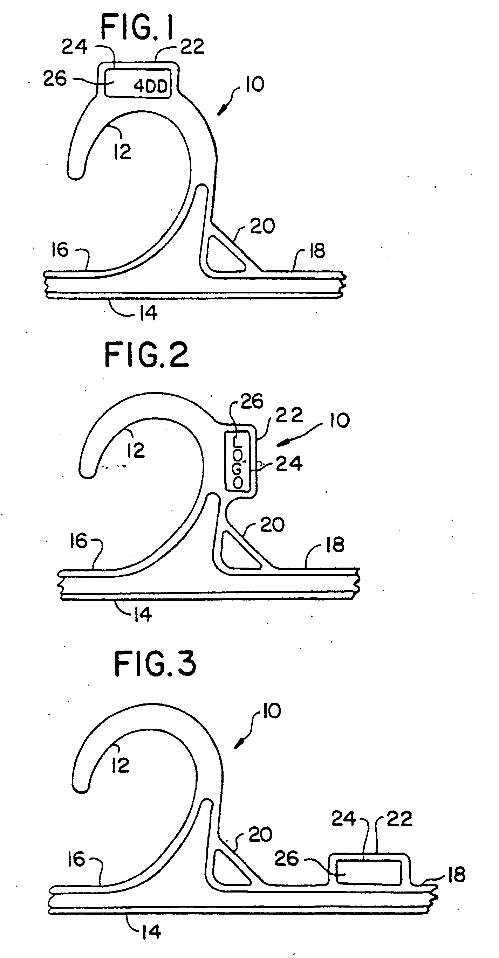

Referring now in detail to the drawings, and particularly the hanger construction as shown in Fig. 1, there is illustrated a partial or fragmentary side view of a molded plastic garment hanger 10 having a central hook portion 12 which is integrally molded with hanger body 14, the latter of which includes a pair of coplanar oppositely directed arms 16 and 18 for suspending one or more garments, as is well known in industry. The distal ends of each of the arms 16 and 18 may, if desired, be equipped with suitable garment gripping or clip structure, for example, as disclosed in US-A-4 623 079, or alternatively, may be of a simple rounded end configuration to merely permit hanging suspension of a garment rather than fastening the garment to the hanger. In order to provide a reinforcement for the hook portion 12, a suitable gusset or flange 20 may be molded into the hanger proximate the juncture between base of the hook portion 12 and the arm 18 of the hanger body 14. This will impart an enhanced degree of strength against bending of the hook portion in the plane of the body 14 under the weight of a supported garment.

Pursuant to the structure of the hanger, as shown in the embodiment of Fig. 1, the upper end of the hook portion 12 has integrally molded thereto a suitable enclosure or frame portion 22 providing an enclosed aperture 24, in this instance, of a generally rectangular configuration. Positioned within the aperture 24 of enclosure 22 is an insert 26 of a plastic material which may either be of the same color and/or type of plastic as that of the basic hanger construction or, alternatively, may be of a different plastic material and/or color to provide a composite hanger structure of a specific decorative nature. The plastic insert 26 is essentially molded into the enclosure 22 so as to fuse with the material of the contacting edge surface of the latter and to thereby form a plastic molded or mechanical bond between the insert 26 and the basic hanger structure 10 as will be hereinafter described in greater detail. Suitable logos and other kinds of indicia may be molded or sized into the insert 26, such as for identifying the garment manufacturer or designer, or the retailer, or may- include any other suitable advertising or identifying legends in conformance with the requirements of the retailer or manufacturer of the garments.

The modified embodiments of the hanger as shown in Figs. 2 and 3, in which identical or similar elements are identified by the same reference numerals as those in Fig. 1, primarily differ from the former in the location of the enclosure 22 for the insert which is molded into the basic garment hanger construction, and whereby the insert 26 is shown at different positions relative to the hanger hook portion 12 and hanger body 14.

Thus, in Fig. 2, rather than being located at the upper end of the hook portion 12, the enclosure 22, and resultingly insert 26, are formed towards one side of the hook portion and extend coplanarly intermediate the upper end and the juncture of the base of the hook portion 12 with the hanger body 14.

Similarly, in the embodiment of Fig. 3, rather than being formed on the hook portion 12, the enclosure 22 may be molded onto the hanger body 14, in this instance, onto the arm 18 so as to extend upwardly therefrom in a type of tab structure, and with the insert 26 being fused and mechanically bonded therein as in the previous embodiments.

It is also possible to contemplate providing apertures for receiving inserts 26 in the body of the hanger portion 14 itself; for instance, such as in the region within the base of the hook portion, or at any other suitable location as desired by the needs of a customer for the garment hanger.

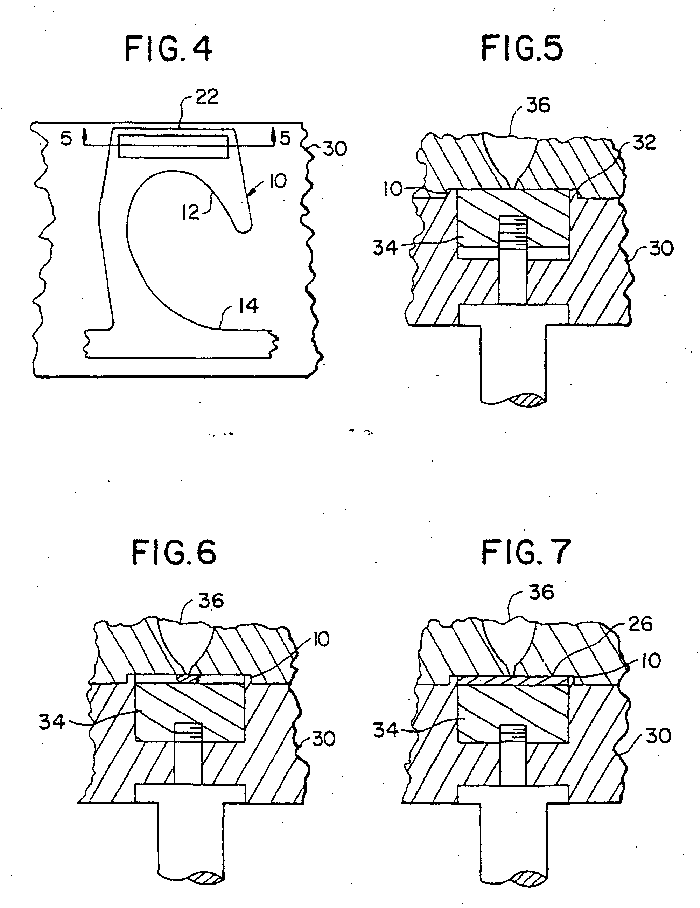

The entire composite hanger structure may be molded in a co-injection plastic mold 30, as shown diagrammatically in Figs. 4 through 7 of the drawings.

Hereby, the injection mold 30 includes a mold cavity 32 which is equipped with a movable core 34 to enable a first plastic material in a molten state to be injected therein so as to form the basic hanger construction 10 incorporating the enclosure or frame 22 for an insert 26 which is to be subsequently located therein. After this molding procedure is completed with regard to the injection of the first plastic material into the mold cavity 32 for the basic hanger construction 10, the core 34 is displaced, as shown in Fig. 6, so as to be retracted to close off the infeed for the first plastic material, and a second plastic material is commenced being injected into the mold cavity from a separate injection inlet 36. The second plastic material, as shown in Fig. 7 fills the aperture or pocket formed within the frame 22 when the core is fully retracted and the mold is allowed to cool to produce the insert 26. Hereby, the second mold cavity formed between the core 34 and the hanger 10 may also be provided with a suitable configuration to permit the concurrent molding of various logo or indicia into or onto the insert 26. The face of the core 34, and the opposing side of the mold cavity, formed by mold 30 may be embossed with complementary indicia, such as size indicia, which may be viewed from either side of the completed hanger. Upon opening of the mold subsequent to cooling, the completed composite garment hanger structure is ejected, the mold then closed and readied for the molding of another garment hanger pursuant to the invention.

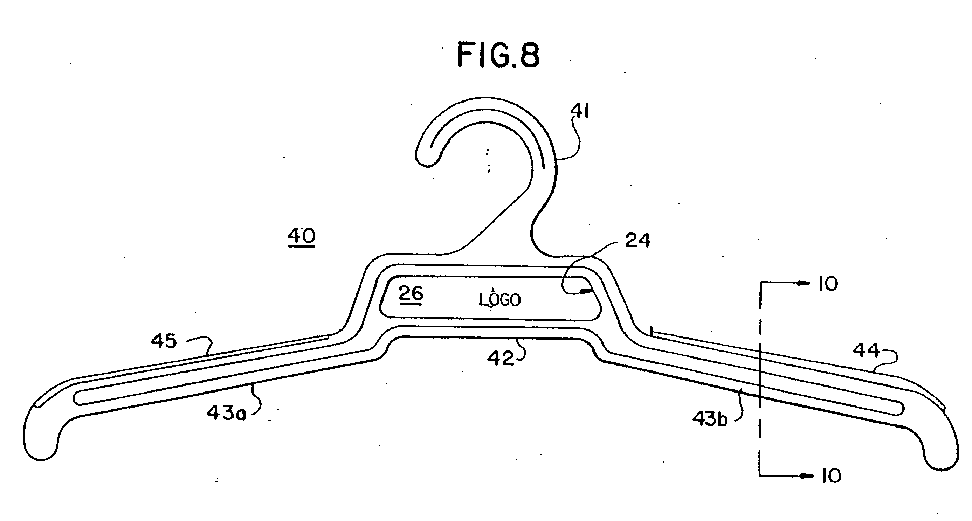

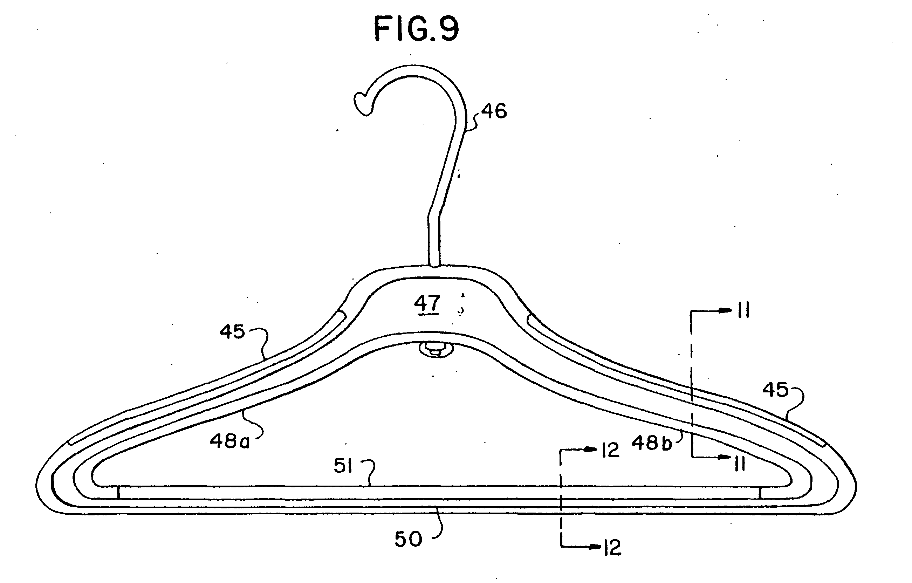

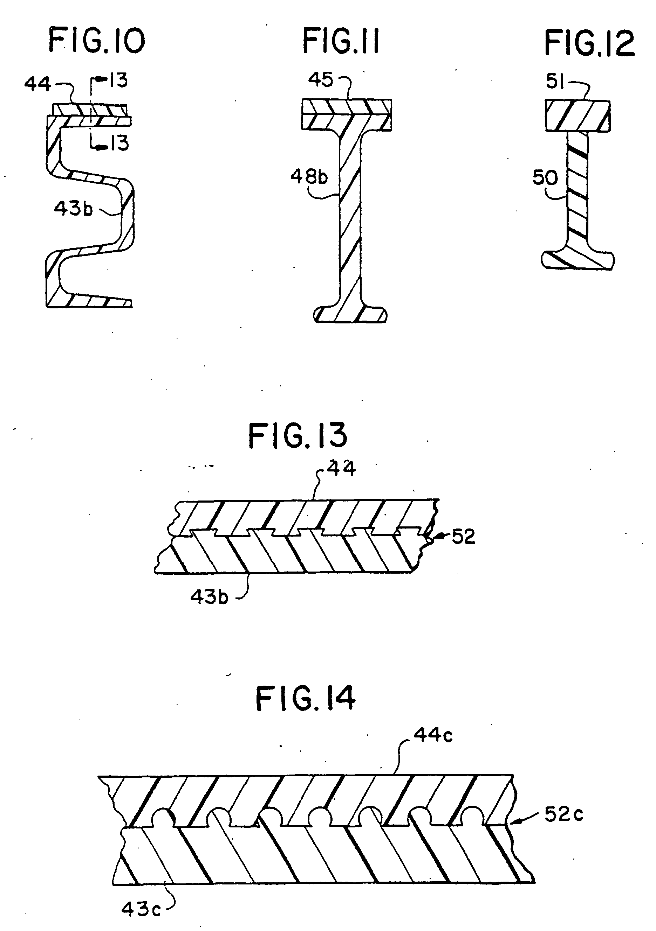

Figure 8 illustrates a side view of an integral molded plastic garment hanger 40 incorporating, for the purposes of illustration, two types of non-slip plastic inserts 44, 45, with one type of each insert on each shoulder of the hanger. The hanger illustrated in Figure 8 includes a centrally located hook portion 41 and a molded body member 42 connected thereto which extends outwardly and downwardly from the lower end of the hook member. This hanger may also form an aperture 24 within body member 42 for receipt of an insert 26 in a manner similar to that illustrated for Figures 1-4. The molded body member has M section arms 43a, 43b which are illustrated in cross-section in Figure 10 which provide structural strength for the hanger and support for the garment. For the purposes of illustration, two types of inserts 44, 45 are illustrated, although it is understood that in actual practice, each of the arms 43a, 43b would normally be equipped with the same type of insert. A cross-section of the arm 43b taken along section line 10-10 is illustrated in Figure 10 which illustrates, in cross-section, the cross-section of the non-slip insert 44 bonded to the shoulder portion of hanger arm 43b. As illustrated in Figure 8, the insert 44 sets on top of the shoulder to provide a non-slip gripping surface for hanger 40. A cross-section of arm 43a would be similar to the cross-section illustrated for Figure 9, wherein the non-slip portion is completely embedded within the outwardly extending arm.

Figure 9 illustrates a composite hanger having a molded plastic body portion and a centrally located metal hook 46 arranged to suspend the hanger from a hanger support bar or the like. The molded plastic body 47 extends outwardly and downwardly from the lower end of the hook member with outwardly extending arms 48a, 48b. Each of the arms 48a, 48b has integrally molded therewith a non-slip layer 45 which forms the upper top portion of the shoulder of each of the hanger arms 48a, 48b.

Figure 11 illustrates a cross-section of the hanger illustrated in Figure 9 taken along section line 11-11. The hanger illustrated in Figure 9 is a coat hanger suitable for supporting medium weight coats and blazers from arms 48a and 48b, and trousers from the trouser bar 50. Trouser bar 50 has fused thereto a non-slip insert 51 arranged across the entire upper portion of the pants support bar 50. A cross-section of the trouser bar 50 taken along the section line 12-12 is illustrated in Figure 12.

The bond between the plastic insert 26 and the enclosure 22 of Figures 1-4 and the non-slip inserts 44, 45 and 51 and the hangers illustrated in Figures 8 and 9 may be a mechanical bond, a molded plastic bond, a fused bond or a combination thereof as desired. The factors which determine the type of bond include the chemical compatibility of the plastics involved, the melting and fuzing temperatures of the respective plastics involved, the temperatures at which the plastic is injected into the respective mold cavities, the temperature at which the cavity is maintained, and the respective dwell time between the injection of the first plastic, and the removal of the mold insert and the injection of the second plastic.

By adjusting the parameters of the process, one may achieve a mechanical bond, a plastic molded bond, or a wholly fused bond wherein the surface layers of the plastics have intermixed with each other.

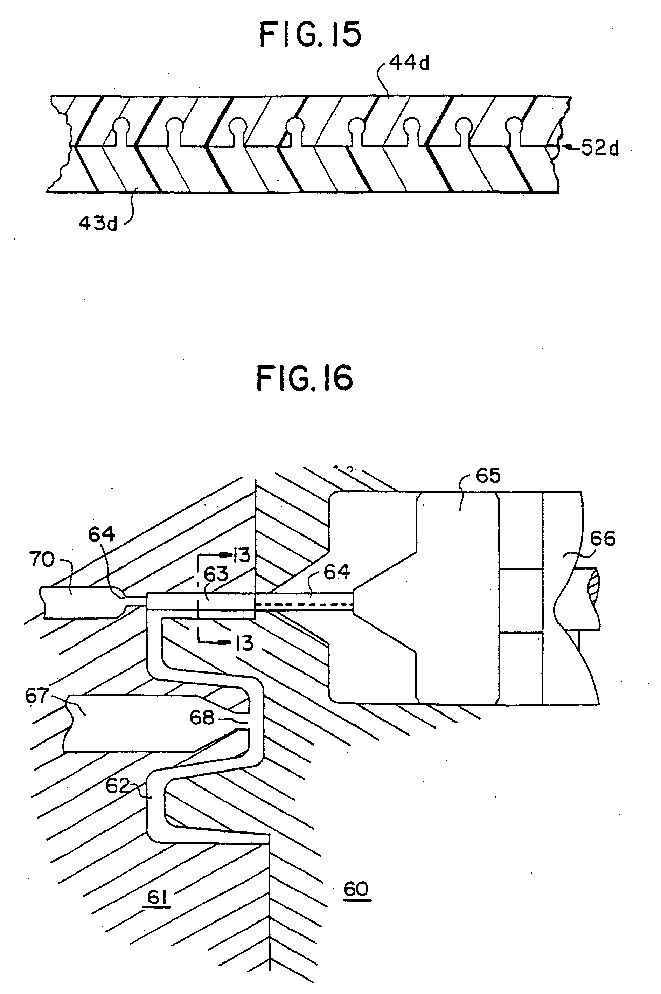

Figure 13 is an enlarged illustration of a portion of the hangers illustrated in Figures 8-10 as formed in the mold cavity illustrated in Figure 16. This cross-section is a portion of the cross-section taken at 90° to the cross-section illustrated in Figures 10 and 16 along section line 13-13. As illustrated in Figure 13, the non-slip plastic insert 44 is mechanically bonded to the support arm 43b by means of a series of interlocking dove tail joints generally indicated at 52. An alternative embodiment for the means by which the non-slip plastic insert 44c is mechanically bonded to arm 43c is illustrated in Figure 14 which illustrates a mechanical bond by means of a series of interlocking buttonhole joints, generally indicated at 52c in Figure 14. Still another embodiment for the means by which the non-slip plastic insert 44d is mechanically bonded to arm 43d is illustrated in Figure 15 which illustrates a mechanical bond by means of a series of interlocking key hole joints, generally indicated at 52d in Figure 15. Any one of a variety of locking methods including those illustrated in Figures 13-15 can be used depending upon the preference of the manufacturer. Alternately, the configurations may be reversed with the key portion that is illustrated as integrally molded on arm 43b, c or d, molded on non-slip insert 44, and the complementary portion that is illustrated as integrally molded on non-slip plastic insert 44b, c or d is molded on arm 43b. The illustrations of Figures 13-15 are intended to be illustrative only of a wide variety of mechanical interlocks suitable for use as a mechanical bond.

The mold for producing the construction is illustrated in Figure 16 wherein injection mold 60, 61 define therebetween a mold cavity 62 with a sub-cavity 63 that is, during a first mold cycle, filled with a reciprocating core member 64. Core member 64 is mounted on reciprocating piston 65 for movement in and out of mold cavity 63 by virtue of a hydraulic cylinder 66.

A first plastic material in a molten state is injected through feeder 67 and orifice 68 to fill the mold cavity 62 during the first mold cycle. During this filling operation, mold core 64 is within and completely fills the mold cavity 63 and closes orifice 69. After the plastic from the primary source feeder 67 has completely filled the mold . cavity 62, a second mold cycle is begun in which the mold core 64 is withdrawn from cavity 63 which allows a second insert plastic material to be injected via conduit 70 through orifice 69 and into mold cavity 63. The residence time of core 64 within cavity 63 is dependent upon the type of plastics being used, the operating temperatures, the cycle time, and the type of bond desired between the insert and the plastic hanger body. It should be noted that the mold core 64 has a dove tail cross-section essentially identical to the cross section illustrated in Figure 13 for insert 44. When mold core 64 is filling cavity 63 it forms the dove tail portion of the main hanger body 43b as illustrated in Figure 13 from the primary material. When the core 64 is withdrawn, the secondary material fills each of the dove tail cavities formed in the base member thereby completing the cross-section illustrated in Figure 13. However, it should be noted that the present invention is not limited to mechanical bonding by means of dove tail joints. As illustrated in Figures 14 and 15 the mold core 64 could also have a buttonhole joint or keyhole joint cross-section as means of mechanically bonding the arm 43b and the non-slip plastic insert 44. After the insert cavity 63 has been filled, mold 60, 61 is cooled, mold members 60, 61 are separated, and the newly formed hanger is ejected from mold cavity 62 by means of ejector pins (not shown).

From the foregoing illustrations it is readily apparent that the present invention is directed to an extremely simple two step process which requires a minimum amount of effort and expenditure, while the molded hangers being versatile in its applications due to the specific structural aspects of the members. No costly hand labor is required to attach sizing index caps, to stamp logos, or to affix the non-slip strips to the shoulders of the hangers. All is accomplished in a single molding operation.

The plastic materials which can be employed with the molding operation in order to produce the composite molded plastic hanger may include, but are not limited to plastic materials such as polystyrene, SAN, ABS, PPO, nylon, polypropylene, polyethylene, PET, polycarbonates, acrylics and PVC among others, each being provided with specific coloration in conformance with the specific demands of the customer. When it is desired to mold composite hangers with the non-slip inserts, polypropylene and polyethylene primary materials may be combined with ethylene vinyl acetate, low density polyethylene, or thermoplastic elastomers for the non-slip layer. Alternately, if polystyrene, ABS or SAN primary materials are desired, they may be combined with ethylene vinyl acetate, PVC or thermoplastic elastomers. Other materials suitable for the primary body construction such as PVC, PC, PMMA or a mixture of a polystyrene with one of the foregoing primary materials may be used with EVA, PVC or thermoplastic elastomers and the non-slip insert material.

More particularly, when a chemical bond is desired, it is preferable to use styrene main as the primary material with styrene or polypropylene main as the primary material with EVA/PP mix. When a chemical and mechanical bond is desired, it is preferable to use styrene main as the primary material with styrene rubber. When a mechanical bond is desired, it is preferable to use polypropylene main as the primary material with polyethylene.

While there have been shown and described what are considered to he the preferred embodiments of the invention, it will, of course, be understood that various modifications and changes in form or detail can readily be made without departing from the invention as hereinafter claimed.

## Claims

1. A method of molding a composite plastic garment hanger (10, 40) formed of first and second plastic materials, said method comprising:
(a) partially filling a plastic hanger mold cavity (32,62) with a retractable mold core (34, 64);
(b) injecting a first plastic material into said plastic hanger mold cavity (32,62) to form a first portion (14,22,42,47) of said composite plastic garment hanger (10, 40), and partially cooling said first material;
(c) retracting said mold core (34,64) to define, in combination with the first plastic material, a second mold cavity (63);
(d) injecting a second plastic material into the second mold cavity (63) to form a second portion (26,44,45, 51) of said composite plastic garment hanger (10,40);
(e) cooling said mold (30, 60,61) to solidify said first and second plastic materials; and
(f) ejecting said composite plastic garment hanger (10,40) from said mold (30, 60, 61);
**characterized in that**
the retractable mold core (34) is positioned in the mold cavity (32) such that an enclosure (22) is provided in said first portion having a through-aperture (24) molded therein of specified configuration and size, and said second mold cavity defines an insert (26) constituted from said second plastic material, having a configuration and size commensurate with the aperture (24) of said enclosure (22) so as to form a bond between said enclosure (22) and said insert (26).

2. The method of claim 1 further including a step of forming a pattern on said retractable mold core (34, 64) to create a first mechanical joint pattern in said first portion of said plastic hanger, and filling said pattern with said second plastic material when said second plastic material is injected.

3. The method of molding a composite plastic hanger as claimed in claim 1, in which said first and second plastic materials are a different color.

4. The method of molding a composite plastic hanger as claimed in claim 3, in which said mold core (34) defines a size indicia or a logo to be molded into said second portion (26) of said composite plastic hanger (10, 40).

5. The method of molding a composite plastic hanger as claimed in claim 1, in which said mold core defines a non-slip shoulder portion (44, 45,51) to be molded into said second portion of said composite plastic hanger.

6. The method of molding a composite plastic hanger as claimed in any one of claims 1 to 5, which further includes the step of molding complementary indicia on each side of said second plastic portion (26) by:
(a) forming a first indicia on a wall portion of said mold cavity (32);
(b) forming a second complementary indicia on a face of said retractable core (34);
(c) covering said first indicia with said core (34) when said first plastic material is injected;
(d) retracting said core (34) to create a mold defined by said first and second indicia and said first portion (22) of said composite plastic hanger;
(e) injecting said second plastic material.

7. The method of molding a composite plastic hanger as claimed in claim 6, wherein size indicia are molded into each side of said composite hanger (10, 40).

8. The method of molding a composite plastic hanger as claimed in claim 6, wherein a removable size indicator is molded into said composite hanger (10,40).

9. The method of molding a composite plastic hanger as claimed in claim 1, wherein said second plastic material is softer than the first plastic material.

10. A method of molding a composite plastic hanger as claimed in any one of claims 1 to 9, wherein said first plastic material is selected from the group consisting of polypropylene, polyethylene and polystyrene.

11. The method of molding a composite plastic hanger as claimed in any one of claims 1 to 10, wherein second plastic material is selected from the group consisting of ethylene vinyl acetate, polyvinyl chloride, low density polyethylene and thermoplastic elastomers.

## Patentansprüche

1. Verfahren zum Formen eines Verbund-Kunststoffkleiderbügels (10, 40), der aus einem ersten und einem zweiten Kunststoffmaterial besteht, wobei das Verfahren umfasst:
(a) teilweises Füllen eines Kunststoffbügel-Formhohlraums (32, 62) mit einem herausziehbaren Formkern (34, 64);
(b) Einspritzen eines ersten Kunststoffmaterials in den Kunststoffbügel-Formhohlraum (32, 62), um einen ersten Abschnitt (14, 22, 42, 47) des Verbund-Kunststoffkleiderbügels (10, 40) auszubilden, und teilweises Kühlen des ersten Materials;
(c) Herausziehen des Formkerns (34, 64), um in Kombination mit dem ersten Kunststoffmaterial einen zweiten Formhohlraum (63) zu bilden;
(d) Einspritzen eines zweiten Kunststoffmaterials in den zweiten Formhohlraum (63), um einen zweiten Abschnitt (26, 44, 45, 51) des Verbund-Kunststoffkleiderbügels (10, 40) auszubilden;
(e) Kühlen der Form (30, 60, 61), um das erste und das zweite Kunststoffmaterial zu verfestigen; und
(f) Ausstoßen des Verbund-Kunststoffkleiderbügels (10, 40) aus der Form (30, 60, 61);
**dadurch gekennzeichnet, dass**:
der herausziehbare Formkern (34) so in dem Formhohlraum (32) angeordnet ist, dass eine Einfassung (22) in dem ersten Teil geschaffen wird, in die eine Durchgangsöffnung (24) mit bestimmter Form und Größe geformt ist, und der zweite Formhohlraum einen Einsatz (26) bildet, der aus dem zweiten Kunststoffmaterial besteht und eine Form und Größe hat, die mit der Öffnung (24) der Einfassung (22) übereinstimmt, so dass eine Verbindung zwischen der Einfassung (22) und dem Einsatz (26) ausgebildet wird.

2. Verfahren nach Anspruch 1, das des weiteren einen Schritt des Ausbildens einer Struktur auf dem herausziehbaren Formkern (34, 64) zum Erzeugen einer ersten mechanischen Verbindungsstruktur in dem ersten Abschnitt des Kunststoffbügels und des Füllens der Struktur mit dem zweiten Kunststoffmaterial beim Einspritzen des zweiten Kunststoffmaterials einschließt.

3. Verfahren zum Formen eines Verbund-Kunststoffbügels nach Anspruch 1, wobei das erste und das zweite Kunststoffmaterial verschiedene Farbe haben.

4. Verfahren zum Formen eines Verbund-Kunststoffbügels nach Anspruch 3, wobei der Formkern (34) ein Größenzeichen oder ein Logo aufweist, das in den zweiten Abschnitt (26) des Verbund-Kunststoffbügels (10, 40) zu formen ist.

5. Verfahren zum Formen eines Verbund-Kunststoffbügels nach Anspruch 1, wobei der Formkern einen rutschbeständigen Schulterabschnitt (44, 45, 51) bildet, der in den zweiten Abschnitt des Verbund-Kunststoffbügels zu formen ist.

6. Verfahren zum Formen eines Verbund-Kunststoffbügels nach einem der Ansprüche 1 bis 5, der des weiteren den Schritt des Formens komplementärer Zeichen auf jede Seite des zweiten Kunststoffabschnitts (26) durch:
(a) Ausbilden eines ersten Zeichens auf einem Wandabschnitt des Formhohlraums (32);
(b) Ausbilden eines zweiten komplementären Zeichens an einer Außenseite des herausziehbaren Kerns (34);
(c) Abdecken des ersten Zeichens mit dem Kern (34), wenn das erste Kunststoffmaterial eingespritzt wird;
(d) Herausziehen des Kerns (34), um eine Form zu erzeugen, die durch das erste und das zweite Zeichen und den ersten Abschnitt (22) des Verbund-Kunststoffbügels gebildet wird;
(e) Einspritzen des zweiten Kunststoffmaterials
einschließt.

7. Verfahren zum Formen eines Verbund-Kunststoffbügels nach Anspruch 6, wobei Größenzeichen in jede Seite des Verbund-Bügels (10, 40) geformt werden.

8. Verfahren zum Formen eines Verbund-Kunststoffbügels nach Anspruch 6, wobei eine abnehmbare Größenanzeige in den Verbund-Bügel (10, 40) geformt wird.

9. Verfahren zum Formen eines Verbund-Kunststoffbügels nach Anspruch 1, wobei das zweite Kunststoffmaterial weicher ist als das erste Kunststoffmaterial.

10. Verfahren zum Formen eines Verbund-Kunststoffbügels nach einem der Ansprüche 1 bis 9, wobei das erste Kunststoffmaterial aus der Gruppe ausgewählt wird, die aus Polypropylen, Polyethylen und Polystyrol besteht.

11. Verfahren zum Formen eines Verbund-Kunststoffbügels nach einem der Ansprüche 1 bis 10, wobei das zweite Kunststoffmaterial aus der Gruppe ausgewählt wird, die aus Ethylen-Vinylacetat, Polyvinylchlorid, Polyethylen niedriger Dichte und Thermoplast-Elastomeren besteht.

## Revendications

1. Procédé pour mouler des cintres en matière plastique composite (10, 40) formés d'une première et d'une deuxième matières plastiques, ledit procédé comprenant les étapes suivantes :
(a) remplir partiellement la cavité d'un moule pour cintres en plastique (32, 62) d'un noyau de moule rétractable (34, 64),
(b) injecter une première matière plastique dans ladite cavité du moule pour cintres en plastique (32, 62) pour former une première partie (14, 22, 42, 47) dudit cintre en matière plastique composite (10, 40), et refroidir partiellement ladite première matière ;
(c) rétracter ledit noyau de moule (34, 64) pour définir, en association avec la première matière plastique, une deuxième cavité de moule (63) ;
(d) injecter une deuxième matière plastique dans la deuxième cavité de moule (63) pour former une deuxième partie (26, 44, 45, 51) dudit cintre en matière plastique composite (10, 40) ;
(e) refroidir ledit moule (30, 60, 61) pour solidifier lesdites première et deuxième matières plastiques ; et
(f) éjecter ledit cintre en matière plastique composite (10, 40) dudit moule (30, 60, 61) ;
**caractérisé en ce que** :
le noyau de moule rétractable (34) est positionné dans la cavité du moule (32) de manière à ce qu'il se forme dans ladite première partie une enceinte (22) dotée d'un trou traversant (24) moulé dans celle-ci, de configuration et de dimension spécifiées, et **en ce que** ladite deuxième cavité de moule définit un insert (26) constitué de ladite deuxième matière plastique, ayant une configuration et une dimension correspondant au trou (24) de ladite enceinte (22) de manière à former une liaison entre ladite enceinte (22) et ledit insert (26).

2. Procédé selon la revendication 1 comprenant en outre l'étape consistant à former un motif sur ledit noyau de moule (34, 64) pour créer un premier motif de jonction mécanique dans ladite première partie dudit cintre en plastique, et à remplir ledit motif avec ladite deuxième matière plastique lorsque la deuxième matière plastique est injectée.

3. Procédé pour mouler des cintres en matière plastique composite selon la revendication 1, dans lequel lesdites première et deuxième matières plastiques sont de couleur différente.

4. Procédé pour mouler des cintres en matière plastique composite selon la revendication 3, dans lequel ledit noyau de moule (34) définit un indicateur de taille ou un logo devant être moulé dans ladite deuxième partie (26) dudit cintre en matière plastique composite (10,40).

5. Procédé pour mouler des cintres en matière plastique composite selon la revendication 1, dans lequel ledit noyau de moule définit une partie d'épaule anti-glissante (44, 45, 51) devant être moulée dans ladite deuxième partie dudit cintre en matière plastique.

6. Procédé pour mouler des cintres en matière plastique composite selon l'une quelconque des revendications 1 à 5, qui comprend en outre l'étape consistant à mouler des indicateurs supplémentaires de chaque côté de ladite deuxième partie en plastique (26) :
(a) en formant un premier indicateur sur une partie formant paroi de ladite cavité de moule (32) ;
(b) en formant un deuxième indicateur supplémentaire sur une face dudit noyau rétractable (34) ;
(c) en couvrant ledit premier indicateur dudit noyau (34) lorsque ladite première matière plastique est injectée ;
(d) en rétractant ledit noyau (34) pour créer un moule défini par lesdits premier et deuxième indicateur et ladite première partie (22) dudit cintre en matière plastique composite, et
(e) en injectant ladite deuxième matière plastique.

7. Procédé pour mouler des cintres en matière plastique composite selon la revendication 6, dans lequel les indicateurs de taille sont moulés de chaque côté dudit cintre en matière plastique (10, 40).

8. Procédé pour mouler des cintres en matière plastique composite selon la revendication 6, dans lequel un indicateur de taille amovible est moulé dans ledit cintre en matière plastique composite (10, 40).

9. Procédé pour mouler des cintres en matière plastique composite selon la revendication 1, dans lequel ladite deuxième matière plastique est plus molle que la première matière plastique.

10. Procédé pour mouler des cintres en matière plastique composite selon l'une quelconque des revendications 1 à 9, dans lequel ladite première matière plastique est sélectionnée dans le groupe formé par le polypropylène, le polyéthylène et le polystyrène.

11. Procédé pour mouler des cintres en matière plastique composite selon l'une quelconque des revendications 1 à 10, dans lequel la deuxième matière plastique est sélectionnée dans le groupe formé par le poly(éthylène/acétate de vinyle), le poly(chlorure de vinyle), le polyéthylène basse densité et les élastomères thermoplastiques.
